# EUROPEAN PATENT SPECIFICATION

(11) **EP 4 272 140 B1**
(45) Date of publication and mention of the grant of the patent: **11.02.2026**
(21) Application number: 20838117.8
(22) Date of filing: 30.12.2020
(51) Int. Cl.: G06Q 10/06

(54) **METHOD OF INDUSTRIAL PROCESSING OF A BULK MATERIAL**
VERFAHREN ZUR INDUSTRIELLEN VERARBEITUNG EINES SCHÜTTGUTS
PROCÉDÉ DE TRAITEMENT INDUSTRIEL D'UN MATÉRIAU EN VRAC

(43) Date of publication of application: 08.11.2023
(73) Proprietor: ABB SCHWEIZ AG, 5400 Baden (CH)
(72) Inventor: JANKA, Dennis, 69121 Heidelberg (DE); BHALODI, Kalpesh, 65451 Kelsterbach (DE); JUHLIN, Prerna, 69126 Heidelberg (DE); POTSCHKA, Andreas, 38642 Goslar (DE); SCHLAKE, Jan-Christoph, 64293 Darmstadt (DE)
(74) Representative: Zimmermann & Partner Patentanwälte mbB
(86) International application number: PCT/EP2020/088053
(87) International publication number: WO 2022/144083

(56) References cited:
- US-A1- 2002 170 367
- US-A1- 2004 111 383
- US-A1- 2009 224 915
- US-A1- 2018 284 741
- US-A1- 2018 369 829
- US-B1- 7 827 122

## Description

### TECHNICAL FIELD

Embodiments of the present disclosure relate to a method of industrial processing of a bulk material. Further embodiments of the present disclosure relate to a system for industrial processing of a bulk material and a computer-readable medium. More particularly, methods and systems according to embodiments of the present disclosure may relate to industrial processing in mining, pulp processing, paper processing and/or cement processing.

### BACKGROUND

The process industries, for example mining, the cement industries, or the pulp and paper industries, are major consumers of resources and emitters of greenhouse gases such as carbon dioxide. It is desired to better understand the impact of the process industries on environmental problems such as the climate change. Further, there is a desire of producers to provide products having a small environmental footprint and an increasing demand by customers for such products. However, in conventional industrial processing, particularly in the industrial processing of bulk materials, the footprint of the processing or of the products with respect to environmental costs or other costs can only be estimated on a very rough scale, considering for example the plurality of process steps or the variety of starting materials.

US 2009/224915 A1 relates to the detection of unplanned waste stream diversion using RFIDs. RFID tags are suspended in a colloidal state in an input bulk material. Incoming RFID tags are counted and then re-counted as they leave the facility. If the incoming and outgoing counts differ, then a conclusion is reached that some of the incoming RFID tags are within an unplanned waste stream diversion. US 2002/170367 A1 relates to a control feedback system for bulk material industrial processes using automated object or particle analysis.

### DISCLOSURE OF THE INVENTION

In view of the foregoing, the present disclosure is directed to a method and a system of industrial processing of a bulk material and a computer-readable medium that can provide a precisely determined footprint with respect to environmental costs or other costs in the industrial processing of bulk materials.

According to an aspect of the present disclosure, a method according to independent claim 1 is provided. In a method of industrial processing of a bulk material, the industrial processing includes a plurality of process steps. The method includes defining a material portion of the bulk material, generating a material portion identifier associated with the material portion, and processing the material portion in at least two process steps of the plurality of process steps. The method includes for each process step of the at least two process steps determining a cost of processing the material portion in the process step, the cost comprising at least one of an energy consumption cost indicative of a consumed fuel energy and/or of a consumed electrical energy, a fuel cost being an amount of fuel consumed and a carbon emission cost indicative of an emission of carbon dioxide, wherein the cost is determined based on process sensor data of the process step. The method further includes for each process step of the at least two process steps generating a history data set, wherein the history data set is indicative of the cost, the process step and the material portion identifier. The method further includes determining an aggregated cost based on the history data sets. It should be understood that the method may further include any of the additional steps and/or features as described herein.

According to another aspect of the present disclosure, a system according to the independent system claim is provided. In a system for industrial processing of a bulk material, the industrial processing includes a plurality of process steps. The system includes a processor and a data system. The system is configured for defining, by the processor, a material portion of the bulk material, generating, by the processor, a material portion identifier in the data system, the material portion identifier being associated with the material portion, and processing the material portion in at least two process steps of the plurality of process steps. For each process step of the at least two process steps the processor is configured for determining a cost of processing the material portion in the process step, the cost comprising at least one of an energy consumption cost indicative of a consumed fuel energy and/or of a consumed electrical energy, a fuel cost being an amount of fuel consumed, and a carbon emission cost indicative of an emission of carbon dioxide, wherein the cost is determined based on process sensor data of the process step. For each process step of the at least two process steps the processor is further configured for generating a history data set in the data system, wherein the history data set is indicative of the cost, the process step and the material portion identifier. The processor is further configured for determining an aggregated cost based on the history data sets. It should be understood that the system may further include any of the additional steps and/or features as described herein.

According to yet another aspect of the present disclosure, a computer-readable medium comprising instructions which, when executed by a processor of a system for industrial processing of a bulk material, cause the system to carry out a method according to embodiments described herein.

Embodiments of the present disclosure may include tracking of a material portion of the bulk material, particularly of a plurality of material portions, through process steps of the industrial processing. Tracking of the material portion and costs associated with the material portion and/or with a process step may enable determining an aggregated cost or a cost footprint of processing the material portion. Industrial processing including material-centric tracking of costs according to embodiments described herein may provide for instance a comprehensive and transparent view on resource consumption and/or environmental costs of products, which may benefit legislators, producers and/or costumers.

According to some embodiments of the present disclosure, defining a material portion may include virtually discretizing the bulk material. In particular, the bulk material may be discretized into a plurality of material portions including the material portion. In embodiments, the material portions of the plurality of material portions may include different amounts of the bulk material. The bulk material may be (purely) virtually discretized while being present as a continuous bulk without corresponding delimiters between (at least some) material portions in the real world (e.g., without real-world tags such as RFIDs and without real-world delimiters between different material portions).

In some embodiments, a material portion may be defined by virtually discretizing the bulk material based on, or taking into account, a real discretization of the bulk material. Such a real discretization can be a division of the bulk material into batches. A batch can be a load of a processing step such as a transportation or material transformation step. For example, in mining a material portion may be defined as one or a number of truck loads, train loads or ship loads, or as a material batch from blasting. In paper processing, a reel of paper may for example be defined as a material portion. In cement processing, e.g. a silo of cement may be defined as a material portion. In some embodiments, the virtual discretization of the bulk material may be finer than a real discretization of the bulk material (e.g., so that a batch contains a plurality of material portions, without real-world delimiters between the material portions of a batch).

In embodiments, a material portion may be defined by virtually discretizing a continuous flux of the bulk material. In particular, a continuous flux may be understood herein as an uninterrupted flux, particularly uninterrupted over a time period, for example uninterrupted over a time period at least 10 minutes, particularly at least 30 min or at least 1 hour. For instance, the amount of material transported in a continuous material flux during a specified amount of time may be defined as a material portion, e.g. the amount of ore transported by a conveyor during a time period.

According to embodiments, a material portion identifier associated with the material portion may be generated. The material portion identifier may include a code for identifying the material portion, particularly for uniquely identifying the material portion. The code may include for example a number or a character string. The material portion identifier may be generated in a data system, e.g. a database or a table.

In embodiments, generating a material portion identifier associated with the material portion includes generating attributes of the material portion identifier, the attributes being indicative of properties of the material portion. According to some embodiments, the attributes include a location attribute indicative of a current location of the material portion. In particular, the location attribute may be associated with a process step currently being performed on the material portion. For example, during crushing of a material portion of ore in a crusher, the location attribute may indicate the crusher as the current location. In some embodiments, the location attribute may be indicative of coordinates of the material portion. For example, the location attribute of a material portion may be indicative of coordinates of a storage site of a plurality of storage sites.

In some embodiments, the attributes include an extensive attribute indicative of an extensive property of the material portion. Extensive properties can depend on the amount of material of the material portion, particularly be proportional to the amount of material. For example, an extensive attribute may be indicative of at least one of a mass of the material portion (e.g. the mass of a material portion of ore), a volume of the material portion, a length of the material portion (e.g. the length of a paper sheet) or any combination thereof. In some embodiments, the attributes include a location attribute and at least one material property attribute, e.g. an extensive attribute indicative of a mass of the material portion.

According to some embodiments, the attributes include an intensive attribute indicative of an intensive property of the material portion. Intensive properties can be at least substantially independent of the amount of material. For example, an intensive attribute can be indicative of a density of the material portion, a grade of the material portion (e.g. a grade of a material portion of ore), a particle size of the material portion (e.g. the particle size of a material portion of ore), a hardness of the material portion, a chemical composition of the material portion, mechanical characteristics of the material portion or any combination thereof. Attributes, particularly intensive attributes, may be generated depending on the type of industrial processing or the type of operations performed on the material portion. For instance, in grinding operations intensive attributes may particularly be indicative of the hardness of the material portion, the chemical composition of the material portion and/or mechanical characteristics of the material portion. In embodiments, the attributes may include a time attribute. For example, the time attribute may be indicative of the time, particularly date and time, of generating the material portion identifier and/or of starting the industrial processing of the material portion, e.g. the time of blasting the material of the material portion at a blasting site of a mine.

According to embodiments of the present disclosure, the material portion is processed in at least two process steps of the plurality of process steps. In embodiments, the at least two process steps include at least one of or any combination of transporting the material portion, storing the material portion, a process changing an intensive property of the material portion, and a process changing an extensive property of the material portion. For example, transporting the material portion may include transporting by truck, train conveyor or ship. Storing the material portion may include storing the material portion alone or together with further material portions at a storage site. In some embodiments, multiple material portions stored together at a storage site may be identifiable according to a first-in-first-out principle, when one or more material portions of the multiple material portions are removed from the storage site. A process changing an intensive property of the material portion may include a process changing a density, a grade or a particle size or a material composition of the material portion, for example crushing a material portion of ore using a crusher to change a particle size of the material portion. A process changing an extensive property of the material portion may include a process changing a volume or a mass of a material portion. For example, a change of mass may result from a drying process.

In some embodiments, the at least two process steps include at least one process having a continuous material flux. For example, in mining a continuous material flux may include a flux of mined ore on a conveyor belt. In embodiments, the at least two process steps may include at least one batch process, for example transporting a truck load, a train load or a ship load.

According to embodiments, a cost of processing the material portion is determined for each process step of the at least two process steps. In embodiments, a cost may be indicative of the consumption of material and/or immaterial production factors in processing the material portion in the process step. In particular, a cost of processing the material portion may not be directly inferable from the material of the material portion.

In embodiments, the cost can include an environmental cost. The environmental cost may be based on an emission of greenhouse gases such as carbon dioxide or methane, and/or based on a pollution of the environment. The cost can include an energy consumption cost indicative of a consumed fuel energy and/or of a consumed electrical energy. The cost can include a fuel cost, the fuel cost being an amount of fuel consumed. The cost can include a carbon emission cost indicative of the emission of carbon dioxide. The cost can include a process efficiency cost, which may for example be indicative of an efficiency of processing the material portion in the process step. The cost can include a monetary cost. The monetary cost may for example be indicative of the monetary costs of consumed energy and/or of the monetary costs associated with the wear of a machine used in the process step. The cost includes one or any combination of an energy consumption cost, a fuel cost, and a carbon emission cost. The cost may particularly further include one or any combination of an environmental cost, a process efficiency cost and a monetary cost.

According to embodiments, the cost is determined based on at least one of a cost model of the process step, process sensor data of the process step, and user input data of the process step. Process sensor data may include data indicative of the conditions of the process step. The process sensor data may be provided by sensor hardware and/or by soft sensors. In embodiments, process sensor data and/or user input data may be provided through a distributed control system (DCS) or a fleet management system to a processor configured for determining the cost. In embodiments, the cost model may include a function and/or a lookup table configured for determining the cost. The cost model may be configured for determining the cost based on inputs such as at least one attribute of the material portion, process sensor data of the process step, user input data of the process step or any combination thereof, e.g. based on an operating mode of a processing machine and a material property of the material portion. For example, a cost may be determined using a cost model based on an extensive attribute indicative of the mass of the material portion being processed, based on a duration of the process step as determined from process sensor data, and/or based on target values of user input data, e.g. a target value for an intensive property of the material portion in a process of changing the intensive property. In further embodiments, a cost may be directly determined from process sensor data and/or from user input data. For example, an electrical energy consumption cost may be determined from a power setting of a machine processing the material portion in the process step. In embodiments, cost models and/or process models may be different for different process steps. Cost models and/or process models for different process steps may follow different modelling paradigms, e.g. from simple linear models to partial differential equations.

According to some embodiments, more than one material portion may be processed in a process step at the same time. If a material portion is processed together with one or more other material portions in the process step, determining the cost of processing the material portion in the process step can include determining a combined cost of processing the material portion and the one or more other material portions in the process step. Determining the cost of processing the material portion in the process step can include proportionally allocating the combined cost to the material portion identifier and one or more other material portion identifiers associated with the one or more other material portions. In particular, proportional allocation may be based on extensive attributes of the material portion identifier and of the one or more other material portion identifiers associated with the one or more other material portions. For example, proportional allocation may be based on extensive attributes indicative of respective masses of the material portion and the one or more other material portions.

According to embodiments, for each process step of the at least two process steps a history data set is generated. In particular, the history data set can be indicative of the cost, the process step and the material portion identifier. The history data set may be generated in a data system, e.g. a database or a table. The history data may include metadata such as a timestamp, metadata indicative of a system of origin or metadata indicative of a cost model used in determining the cost of processing the material portion in the process step. In some embodiments, if the material portion is processed together with one or more other material portions in the process step, the history data set may be indicative of the material portion and a cost determined by proportional allocation of the combined cost. In further embodiments, the history data set may be indicative of the combined cost and of a list of material portion identifiers, the list including the material portion identifier and the one or more other material portion identifiers.

In some embodiments, for each process step of the at least two process steps the attributes are updated. In particular, the attributes may be updated based on the process step, for example based on a process model of the process step, process sensor data of the process step and/or based on user input data of the process step. The process model can include a mathematical function or lookup table for determining updated attributes, particularly updated attributes indicative of material properties, which change during the process step. The process model may use processing conditions as input for determining the updated attributes. The process model may particularly use process sensor data and/or user input data as input for determining updated attributes. The process sensor data and/or the user input data may be received through a distributed control system (DCS) or a fleet management system by a processor configured to update the attributes. For instance, a location attribute indicative of a first location of a first process step may be updated after completion of the first process step to indicate a second location of a second process step subsequent to the first process step. An intensive attribute may be updated in response to a process changing an intensive property of the material portion. For example, an intensive attribute indicative of a particle size of a material portion of ore may be updated after crushing based on a particle size of the ore after crushing as determined from process sensor data or based on a particle size setting in user input data. In some embodiments, one or more of the attributes may be logged in an attribute history associated with the material portion identifier before updating the attributes of the material portion identifier.

According to embodiments, an aggregated cost can be determined based on the history data sets. In embodiments, the aggregated cost may be determined based on history data sets associated with or indicative of the material portion identifier. The aggregated cost may be determined based on costs of history data sets, wherein the history data sets are associated with or indicative of the material portion identifier. The aggregated cost may for example be determined for the at least two process steps. In embodiments, an overall cost of processing the material portion may be determined as an aggregated cost for all process steps of the plurality of process steps. The overall cost can be determined based on history data sets, which are indicative of the plurality of process steps and which are indicative of the material portion identifier or of related material portion identifiers being related to the material portion identifier.

In embodiments, the related material portion identifier may be a precursor identifier, wherein the material portion identifier is generated downstream of splitting or merging of the precursor identifier according to embodiments described herein. In some embodiments, the related material portion identifier may be a derived identifier, wherein the derived identifier is generated downstream of splitting and/or merging the material portion identifier according to embodiments described herein. In embodiments, a relation between a material portion identifier and a related material portion identifier may for example be determined based on a precursor attribute indicating one or more precursor identifiers of a material portion identifier.

Determining an aggregated cost based on the tracking of costs in the history data sets may provide a more comprehensive view on costs incurred throughout various steps of industrial processing. For example, a material-centric approach to cost tracking according to embodiments may enable certification of products, e.g. as incurring less than a predetermined environmental cost, and/or enable process optimization of the industrial processing. For instance, one or multiple process steps may be optimized with respect to one or more types of costs and particularly in view of the attributes of material portion identifiers.

According to embodiments, the material portion identifiers may be filtered using attribute values of the attributes. For example, the data system may be searched for all material portion identifiers with a location attribute indicating a searched location. A cumulative cost associated with the filtered material portion identifiers may be determined. For example, a cumulative carbon emission cost may be determined for all material portions currently located at the searched location.

According to some embodiments, a material portion identifier can be split into at least two split material portion identifiers. In particular, splitting can include generating the at least two split material portion identifiers, each of the at least two split material portion identifiers being associated with a material sub-portion of the material portion. In embodiments, splitting includes associating each of the at least two split material portion identifiers with the history data sets of the material portion identifier.

In some embodiments, splitting includes generating split attributes of the split material portion identifiers. Generating the split attributes may include generating location split attributes. The location split attributes may be indicative of the same location as the location attribute of the material portion identifier. Generating the split attributes may include proportionally allocating values of extensive attributes of the material portion identifier to extensive split attributes of the split material portion identifiers. For example, if each of two material sub-portions are defined as half of the material portion, half of a mass value of an extensive attribute indicative of the mass of the material portion may be allocated to an extensive split attribute of each of the split material portion identifiers.

In some embodiments, generating split attributes of the split material portion identifiers may include generating an intensive split attribute for each of the split material portion identifiers. The intensive split attribute can have the same value as an intensive attribute of the material portion. In particular, the intensive split attributes of the split material portion identifiers can have the same values. For example, a material portion identifier associated with a material portion of ore may have an intensive attribute indicative of a grade of the ore. Split material portion identifiers may be generated, each having an intensive split attribute indicative of the grade of the ore. In embodiments, an intensive split attribute can have different values for each of the split material portion identifiers. An intensive split attribute can have a different value with respect to the intensive attribute of the material portion. For example, a material portion may be processed in a concentrator, e.g. in a centrifuge, that separates ore into high-grade material and low-grade material. Split material portion identifiers associated with material sub-portions separated using the concentrator may have different values for an intensive split attribute indicative of the grade.

In embodiments, the at least two split material portion identifiers may be associated with the history data sets of the material portion identifier for example by providing the split material portion identifier with a reference to the material portion identifier. The material portion identifier can be a precursor identifier to the split material portion identifier. For example, the split material portion identifiers may each include a precursor attribute indicative of the material portion identifier. In embodiments, an aggregated cost of processing a material sub-portion associated with a split material portion identifier may be determined based on history data sets indicative of the split material portion identifier and one or more precursor identifiers. The aggregated cost may include a partial cost of a cost of a history data set indicative of the precursor identifier. The partial cost of the cost may be calculated based on the ratio of an extensive split attribute (e.g. of a mass) of the split material portion identifier to the extensive attribute of the precursor identifier.

According to embodiments, a material portion identifier can be merged with a further material portion identifier into a merged material portion identifier, the further material portion identifier being associated with a further material portion of the bulk material. In particular, merging includes generating the merged material portion identifier, the merged material portion identifier being associated with the material portion and with the further material portion. In embodiments, merging includes associating the merged material portion identifier with the history data sets indicative of the material portion identifier and with further history data sets indicative of the further material portion identifier.

In some embodiments, merging includes generating merged attributes of the merged material portion identifier. Generating the merged attributes may include generating a merged location attribute. The merged location attribute may be indicative of the same location as the location attribute of the material portion identifier and the further material portion identifier. Generating the merged attributes may include for example adding an extensive attribute of the material portion identifier and a corresponding extensive attribute of the further material portion identifier. For example, extensive attributes indicative of the respective masses of the material portion identifier and of the further material portion identifier may be added to obtain a merged extensive attribute of the merged material portion identifier.

In some embodiments, generating merged attributes of the merged material portion identifier may include generating an intensive merged attribute for the merged material portion identifier. In particular, an intensive merged attribute may be obtained by calculating a weighted average of corresponding intensive attributes of the material portion identifier and the further material portion identifier. For example, an intensive merged attribute indicative of the grade of a merged material portion of ore may be calculated as a mass-weighted average of the intensive attributes indicative of grade of the material portion identifier and the further material portion identifier.

In embodiments, the merged material portion identifiers may be associated with the history data sets of the material portion identifier and the further material portion identifier for example by providing the merged material portion identifier with a reference to the material portion identifier and the further material portion identifier. The material portion identifier and the further material portion identifier can be precursor identifiers to the merged material portion identifier. For example, the merged material portion identifier may include a precursor attribute indicative of the precursor identifiers. In embodiments, an aggregated cost of processing the merged material portion associated with a merged material portion identifier may be determined based on history data sets indicative of the merged material portion identifier and one or more precursor identifiers. The aggregated cost may include the costs of history data sets indicative of the precursor identifiers. In particular, an aggregated cost of processing the merged material portion may include a cost of a history data set indicative of the material portion identifier and cost of a history data set indicative of the further material portion identifier.

In some embodiments of the present disclosure, an idle history data set may be generated, when a process step is in an idling mode, particularly when no material portion of the bulk material is being processed in the process step. An idle cost of the process step being in an idling mode may be determined. The idle cost may include any of the costs according to embodiments described herein. The idle history data set can be indicative of the process step and the idle cost. An aggregated cost of processing a material portion, particularly an overall cost of processing a material portion, may include at least a part of an idle cost of an idle history data set. For example, a combined idle cost may be calculated based on idle history data sets in a predetermined time period. The combined idle cost may be proportionally allocated to aggregated costs or overall costs of a plurality of material portions, e.g. material portions processed during the predetermined time period.

According to some embodiments, industrial processing includes mining, pulp processing, paper processing or cement processing. In embodiments, the system may be configured for mining, pulp processing, paper processing or cement processing.

According to embodiments, a system for industrial processing may be configured for a plurality of process steps, particularly at least two process steps. For example, the system may include a distributed control system (DCS) for controlling and/or monitoring the plurality of process steps. The system can include a processor. The system can include a data system. The data system may include one or more databases and/or tables. The data system may be provided on a memory device.

In embodiments, a processor may include a central processing unit (CPU). To facilitate performing operations according to embodiments described herein, the processor may be one of any form of general purpose computer processor that can be used in an industrial setting. The memory device containing the data system and/or a computer-readable medium may be coupled to the processor. The memory device and/or the computer readable medium may be one or more readily available memory devices such as random access memory, read only memory, floppy disk, hard disk, or any other form of digital storage either local or remote. The processor may be coupled to support circuits for supporting the processor in a conventional manner. These circuits may include cache, power supplies, clock circuits, input/output circuitry and related subsystems, and the like. For example, the processor may be configured to receive process sensor data and/or user input data via input circuitry.

Instructions for industrial processing according to embodiments described herein, particularly according to methods as described herein, may be stored in the computer-readable medium as a software routine typically known as a recipe. The software routine, when executed by the processor, transforms the general purpose computer into a specific purpose computer, and can cause the system to carry out a method or any operations of industrial processing according to embodiments of the present disclosure. Although the method of the present disclosure may be implemented as a software routine, some of the method operations that are disclosed herein may be performed in hardware as well as by the software. As such, the embodiments may be implemented in software as executed upon a computer system, and hardware as an application specific integrated circuit or other type of hardware implementation, or a combination of software and hardware.

According to embodiments described herein, the methods of the present disclosure can be conducted using computer programs, software, computer software products and/or a system for industrial processing, which can have a processor, a computer-readable medium, a memory device, a user interface, and/or input and output devices being in communication with corresponding components of the system for industrial processing.

In embodiments, a software conducting methods or operations of embodiments described herein may run concurrently with the industrial processing, particularly in real time. The software may conduct operations of the method in an event-triggered manner, e.g. upon completion of a process step, or upon elapsing of fixed time increments. Some embodiments may enable simulating industrial processing, e.g. as a discrete-event simulation or as a fixed-increment time simulation, to run what-if scenarios or for determining optimal processing setpoints for given scenarios.

Embodiments of the present disclosure may provide a comprehensive and transparent view of costs in industrial processing of bulk material, particularly with respect to an environmental impact of the industrial processing, e.g. in mining industry, cement industry or pulp and paper industry. Embodiments may allow to determine an aggregated cost associated with processing of a material portion. Embodiments may be beneficial for legislators to set up and enforce regulations in a meaningful way. Embodiments may enable producers to comply with regulations, to certify their products, to advertise their products, to improve production efficiency, or to improve their environmental footprint. For example, similar products produced under different conditions may have a different environmental footprint and different overall monetary costs. In particular, the products might be advertised and sold based on environmental footprint and other costs. Customers may get a transparent view of the environmental footprint of goods or products they buy.

Further aspects, benefits, and features of the present disclosure are apparent from the claims, the description, and the accompanying drawings.

### BRIEF DESCRIPTION OF THE DRAWINGS

The accompanying drawings relate to embodiments of the disclosure and are described in the following:
- FIGS. 1A-1C: schematically illustrate operations of industrial processing according to embodiments described herein;
- FIG. 2: illustrates a flow diagram of a method according to embodiments of the present disclosure; and
- FIGS. 3A-3B: schematically illustrate operations of industrial processing, particularly in mining, according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

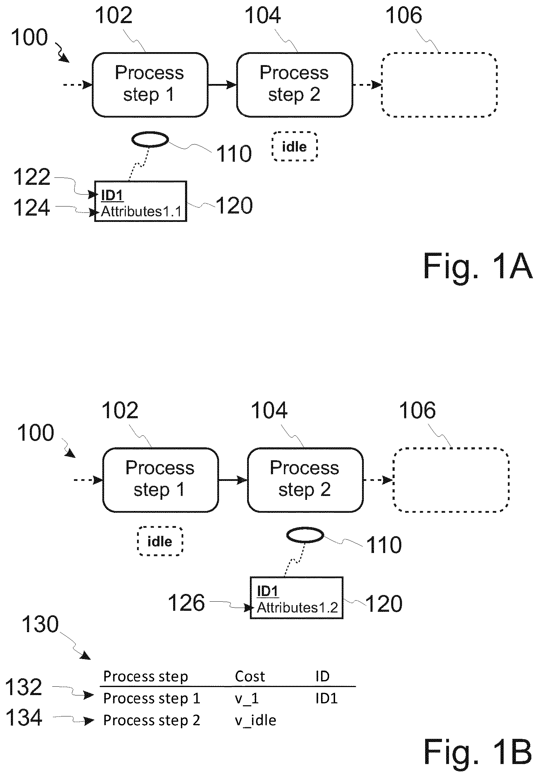

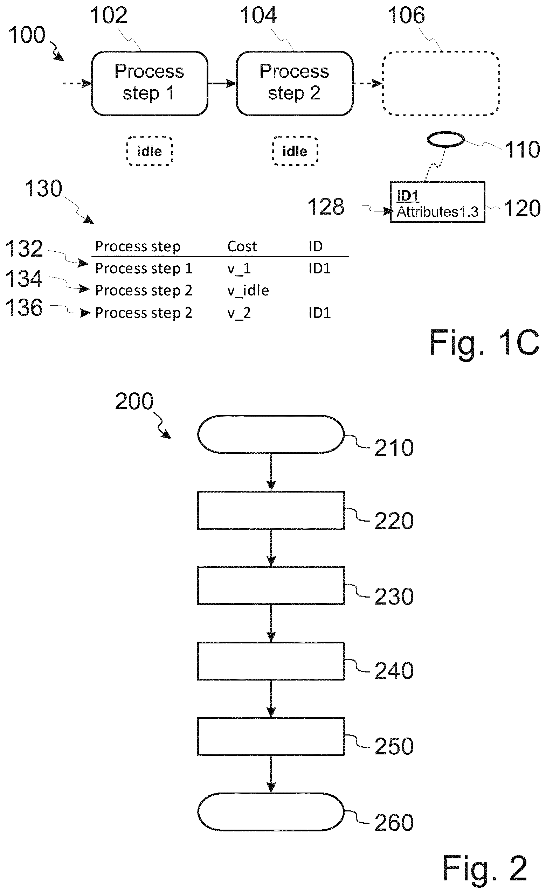

Figs. 1A-1C schematically illustrate industrial processing according to systems or methods described herein. Fig. 1A illustrates a plurality of process steps 100 of industrial processing of a bulk material. The plurality of process steps 100 includes at least two process steps, particularly a first process step 102 ("Process step 1") and a second process step 104 ("Process step 2"). The terms "first" and "second" are used to distinguish the process steps. In particular, the first process step 102 may be the first of the plurality of process steps 100 or may be an intermediate process step of the plurality of process steps 100. Figs. 1A-1C show a material portion 110 being tracked through the plurality of process steps 100, as explained in the following in conjunction with Fig. 2, which illustrates a method 200 according to embodiments.

At 210 of method 200, a material portion 110 is defined. At 220, a material portion identifier 120 associated with the material portion 110 is generated. Referring to the material portion 110 shown in Fig. 1A, the material portion identifier 120 includes a code 122 ("ID1") to uniquely identify the material portion 110. At 220, attributes of the material portion identifier 120 are generated. The attributes are indicative of properties of the material portion 110. For example, attributes of the material portion identifier 120 may include a location attribute and an attribute indicative of a mass of the material portion 110.

At 230, the material portion 110 is processed in the first process step 102 of the at least two process steps. In Fig. 1A, the material portion identifier 120 includes attributes 124 ("Attributes 1.1"). A location attribute of the "Attributes 1.1" can be indicative of a location at which the first process step 102 is performed. Fig. 1A illustrates the second process step 104 running in an idle mode, particularly without a material portion being processed. It should be understood that one or more other material portions may be processed in the first process step 102 and/or in the second process step 104, while the material portion 110 is being processed in the first process step 102.

After processing the material portion 110 in the first process step 102, at 240 the material portion 110 is processed in the second process step 104, as illustrated in Fig. 1B. The attributes 124 (Fig. 1A) are updated to updated attributes 126 ("Attributes 1.2", Fig. 1B). In particular, the attributes can be updated based on a process model of the first process step 102. A location attribute of the material portion identifier 120 is updated to a location at which the second process step 104 is performed. For the first process step 102, a first cost ("v_1") for processing the material portion 110 in the first process step 102 is determined, e.g. based on a cost model of the first process step 102. A first history data set 132 is generated in a data system 130. The first history data set 132 is indicative of the first process step 102 ("Process step 1"), the first cost ("v_1") and the material portion identifier 120 ("ID1").

In the data system 130 illustrated in Fig. 1B, an idle history data set 134 is generated. In particular, the idle history data set 134 is indicative of the process step that was running idle before processing the material portion 110. More specifically, the idle history data set 134 is indicative of the second process step 104 and of an idle cost ("v_idle") of running the second process step 104 in an idle mode.

After processing the material portion 110 in the second process step 104, at 250 the material portion 110 is processed in a further process step 106 of the plurality of process steps 100, as illustrated in Fig. 1C. In further embodiments, the second process step 104 may be the final process step of the plurality of process steps. The updated attributes 126 (Fig. 1B) are updated to further updated attributes 128 ("Attributes 1.3", Fig. 1C), e.g. based on a process model of the second process step 104. For the second process step 104, a second cost ("v_2") for processing the material portion 110 in the second process step 104 is determined, e.g. based on a cost model of the second process step 104. In particular, the cost model and the process model for the second process step 104 can be different from the cost model and the process model for the first process step 102. A second history data set 136 is generated in the data system 130. The second history data set 136 is indicative of the second process step 104 ("Process step 2"), the second cost ("v_2") and the material portion identifier 120 ("ID1"). The above operations may be conducted for one or more further process steps, particularly for each of the plurality of process steps 100.

At 260, an aggregated cost is determined based on the history data sets. In particular, the aggregated cost may be determined based on the first history data set 132 and based on the second history data set 136. For example, the aggregated cost of processing the material portion 110 in the first process step 102 and the second process step 104 includes the sum of the first cost ("v_1") and the second cost ("v_2"). The aggregated cost can include at least a part of the idle cost ("v_idle") of the idle history data set. It should be understood that the material portion 110 may be one of a plurality of material portions of the bulk material being processed in the plurality of process steps 100. The idle cost ("v_idle") may particularly be distributed to aggregated costs or overall costs of processing one or more material portions of the plurality of material portions.

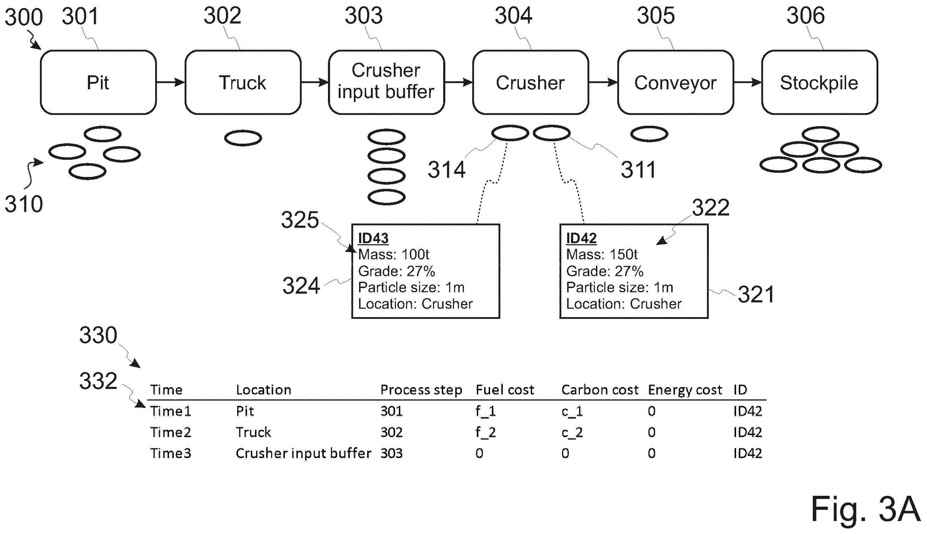

Figs. 3A-3B illustrate an example of industrial processing of a bulk material according to embodiments, particularly an example of mining of ore. Industrial processing includes a plurality of process steps 300. For example, the plurality of process steps 300 include process steps of transporting the material, e.g. when loading the material in the pit (process step 301), transporting using a truck (process step 302) or using a conveyor (process step 305). The plurality of process steps 300 include a process step changing an intensive property of the bulk material, particularly changing a particle size of the material when crushing the material in a crusher (process step 304). The plurality of process steps 300 particularly include process steps of storing the material, e.g. temporarily storing material in a crusher input buffer (process step 303) or in a stockpile (process step 306).

In Figs. 3A-3B, a plurality of material portions 310 is processed in the plurality of process steps 300. In Fig. 3A, the plurality of material portions 310 particularly includes a material portion 311 with an associated material portion identifier 321 ("ID42") and a further material portion 314 with an associated further material portion identifier 324 ("ID43"). In Fig. 3A, the material portion 311 and the further material portion 314 are being processed in process step 304, particularly being crushed by a crusher to reduce a particle size of the ore. Attributes 322 of the material portion identifier 321 and further attributes 325 of the further material portion identifier 324 are indicative of a mass, a grade, a particle size and a location.

Fig. 3A further shows history data sets 332 stored in a data system 330, the history data sets 332 being indicative of the material portion identifier 321, particularly history data sets indicative of "ID42". The history data sets 332 shown in Figs. 3A-3B may be obtained by searching or filtering the data system 330 for history data sets 332 indicative of the material portion identifier 321, The data system 330 contains further history data sets for at least some of the plurality of material portions 310. For each of the process steps 301-303, the history data sets 332 include a timestamp ("Time") and the history data sets 332 are indicative of the process step, the location, the material portion identifier ("ID"), a fuel consumption cost ("Fuel cost"), a carbon emission cost ("Carbon cost") and an electrical energy consumption cost ("Energy cost"). For example, during loading (process step 301) of the material portion 311 in the pit and during transporting (process step 302) of the material portion 311 from the pit to the crusher input buffer, machines such as trucks and excavators consumed fuel and incurred fuel consumption costs f_1 and f_2. The consumption of fuel further incurred carbon emission costs c_1 and c_2 for process steps 301 and 302, respectively. In process step 303, the material portion 311 was temporarily stored in the crusher input buffer before being received by the crusher for crushing (process step 304). During storage in process step 303, fuel consumption costs, carbon emission costs and electrical energy consumption costs were zero.

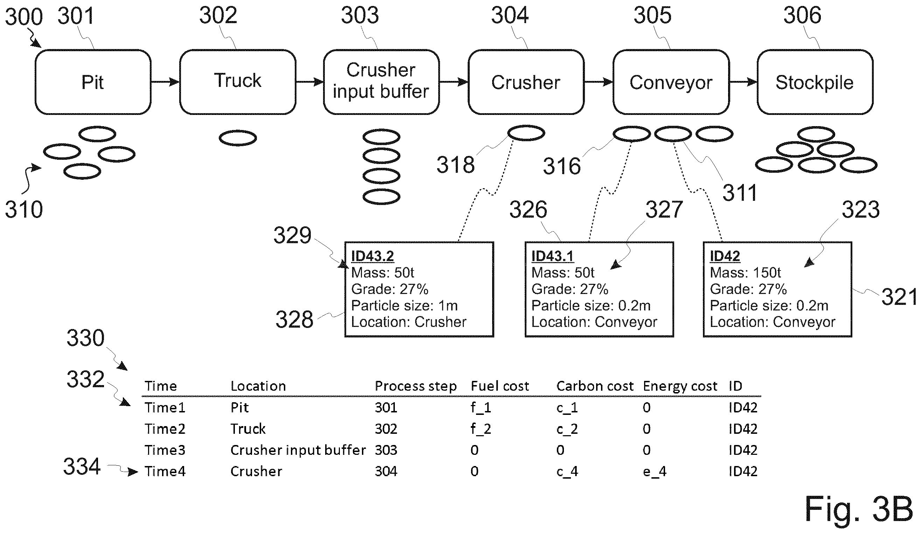

As illustrated in Fig. 3B, the material portion 311 and a first material sub-portion 316 of the further material portion 314 have proceeded to being transported by a conveyor (process step 305) after being crushed in the crusher. A second material sub-portion 318 of the further material portion 314 remains to be crushed in the crusher (process step 304). For example, crushing may be performed for a predetermined time duration, in which only a certain amount of material can be processed, e.g. 200 metric tonnes of ore. In Fig. 3B, the further material portion identifier 324 is split into two split material portion identifiers, particularly into a first split material portion identifier 326 associated with the first material sub-portion 316 and a second split material portion identifier 328 associated with the second material sub-portion 318.

First split attributes 327 of the first split material portion identifier 326 and second split attributes 329 of the second split material portion identifier 328 are generated based on a process model of process step 304. In the example of Fig. 3B, the masses of the first split attributes 327 and of the second split attributes 329 may be calculated using the process model based on the mass (200 t) being processed during the predetermined time duration of crushing and based on the masses provided by the respective attributes of the material portion identifier 321 (150 t) and the further material portion identifier 324 (100 t). In particular, the process model assigns a mass of 50 metric tonnes to each of the first split attributes 327 and the second split attributes 329.

Based on the process model, a particle size for the first split attributes 327 and for the updated attributes 323 of the material portion identifier 321 are determined. In particular, the process model may determine that the particle size has been reduced by crushing from 1 m to 0.2 m. Some attributes may remain unchanged. For example, the grade of the ore of the material portion 311 and of the first material sub-portion 316 may remain unchanged by process step 304. The location attributes of the first split material portion identifier 326 and of the material portion identifier 321 are determined to indicate the conveyor as the current location.

After process step 304, the costs of crushing the material portion 311 are determined. In particular, a combined cost for each of the fuel consumption cost, the carbon emission cost and the electrical energy consumption cost is determined for crushing the material portion 311 and the first material sub-portion 316. A cost model is used to calculate a combined electrical energy consumption cost, e.g. based on process sensor data. Based on data on carbon emissions in the production of power used to supply the crusher, the cost model is used to calculate a combined carbon emission cost. Each of the combined costs is proportionally allocated to the material portion identifier 321 and to the first split material portion identifier 326 based on the respective attributes indicative of mass. In the example of Fig. 3B, 75% of each of the combined costs is allocated to the material portion identifier 321 and 25% of each of the combined costs is allocated to the first split material portion identifier 326.

As illustrated in Fig. 3B, a history data set 334 indicative of the process step 304, the material portion identifier 321 and the costs incurred by processing of the material portion 311 in the process step 304 is generated. In particular, the costs include an electrical energy consumption cost c_4 and a carbon emission cost e_4 as determined from the cost model and the proportional allocation of the combined costs. A further history data set (not shown) is generated for the first split material portion identifier 326 indicative of the first split material portion identifier 326, the process step 304 and the respective costs incurred by processing the first material sub-portion 316 in process step 304.

An aggregated cost of processing the material portion 311 may be determined e.g. for each of the costs shown for the history data sets 332 in Fig. 3B. For example, an aggregated cost can be determined for at least two of the process steps 301-304 by adding the respective fuel consumption costs, the respective carbon emission costs or the respective electrical energy consumption costs. In particular, an aggregated cost calculated over all of the plurality of processing steps 300, e.g. an overall carbon emission cost, may be used to certify a product made from material of the material portion 311. For example, steel produced from a material portion of ore with an overall carbon emission cost per mass below a predetermined threshold may be certifiable as produced under environmentally friendly conditions. Further, embodiments may allow for a transparent view of material portions currently being processed in the plurality of process steps. For example, in Fig. 3B the data system 330 and/or the attributes of the plurality of material portions 310 may be queried for material portions currently located at a location, e.g. at the stockpile (process step 306). Based on the query it may be determined how much carbon was emitted or which monetary costs were incurred in the production of the material currently in stock. As such, embodiments of the present disclosure can particularly be used to improve process efficiency or to gain a comprehensive view of the cost footprint of industrial processing of bulk materials.

While the foregoing is directed to embodiments of the disclosure, other and further embodiments of the disclosure may be devised without departing from the basic scope thereof, and the scope thereof is determined by the claims that follow.

## Claims

1. A method (200) of industrial processing of a bulk material, the industrial processing comprising a plurality of process steps (100), the method (200) comprising:
- defining a material portion (110) of the bulk material;
- generating a material portion identifier (120) associated with the material portion (110);
- processing the material portion (110) in at least two process steps of the plurality of process steps (100);
the method (200) comprising for each process step of the at least two process steps:
- determining a cost of processing the material portion (110) in the process step, the cost comprising at least one of an energy consumption cost indicative of a consumed fuel energy and/or of a consumed electrical energy, a fuel cost being an amount of fuel consumed, and a carbon emission cost indicative of an emission of carbon dioxide, wherein the cost is determined based on process sensor data of the process step; and
- generating a history data set, wherein the history data set is indicative of the cost, the process step and the material portion identifier (120);
and wherein the method (200) further comprises determining an aggregated cost based on the history data sets.

2. The method (200) according to claim 1, wherein generating the material portion identifier (120) comprises generating attributes (124) of the material portion identifier (120), the attributes (124) being indicative of properties of the material portion (110).

3. The method (200) according to claim 2, wherein the attributes (124) comprise at least one of a location attribute indicative of a current location of the material portion (110), an extensive attribute indicative of an extensive property of the material portion (110), and an intensive attribute indicative of an intensive property of the material portion (110).

4. The method (200) according to any one of claims 2 and 3, further comprising for each process step of the at least two process steps:
- updating the attributes (124) based on the process step.

5. The method (200) according to any one of the preceding claims, wherein the cost further comprises at least one of an environmental cost, a process efficiency cost and a monetary cost.

6. The method (200) according to any one of the preceding claims, wherein the cost is further determined based on at least one of a cost model of the process step, and user input data of the process step.

7. The method (200) according to any one of the preceding claims, wherein the at least two process steps comprise at least one of transporting the material portion (110), storing the material portion (110), a process changing an intensive property of the material portion (110), and a process changing an extensive property of the material portion (110).

8. The method (200) according to any one of the preceding claims, wherein, if the material portion (110) is processed together with an other material portion in the process step, determining the cost of processing the material portion (110) in the process step comprises
- determining a combined cost of processing the material portion (110) and the other material portion in the process step; and
- determining the cost of processing the material portion (110) in the process step and an other cost of processing the other material portion by proportionally allocating the combined cost to the cost and the other cost.

9. The method (200) according to any one of the preceding claims, further comprising splitting of the material portion identifier into at least two split material portion identifiers, wherein splitting comprises:
- generating the at least two split material portion identifiers, each of the at least two split material portion identifiers being associated with a material sub-portion of the material portion; and
- associating each of the at least two split material portion identifiers with the history data sets of the material portion identifier.

10. The method (200) according to any one of claims 1 to 8, wherein the method (200) further comprises merging the material portion identifier with a further material portion identifier into a merged material portion identifier, the further material portion identifier being associated with a further material portion of the bulk material, wherein merging comprises:
- generating the merged material portion identifier, the merged material portion identifier being associated with the material portion and with the further material portion; and
- associating the merged material portion identifier with the history data sets indicative of the material portion identifier and with further history data sets indicative of the further material portion identifier.

11. The method (200) according to any one of the preceding claims, wherein the industrial processing comprises mining, pulp processing, paper processing or cement processing.

12. The method (200) according to any one of the preceding claims, wherein the at least two process steps comprise at least one process having a continuous material flux.

13. A system for industrial processing of a bulk material, the industrial processing comprising a plurality of process steps (100), wherein the system comprises a processor and a data system, the system being configured for:
- defining, by the processor, a material portion (110) of the bulk material;
- generating, by the processor, a material portion identifier (120) in the data system, the material portion identifier (120) being associated with the material portion (110);
- processing the material portion (110) in at least two process steps of the plurality of process steps (100);
wherein for each process step of the at least two process steps the processor is configured for:
- determining a cost of processing the material portion (110) in the process step, the cost comprising at least one of an energy consumption cost indicative of a consumed fuel energy and/or of a consumed electrical energy, a fuel cost being an amount of fuel consumed, and a carbon emission cost indicative of an emission of carbon dioxide, wherein the cost is determined based on process sensor data of the process step; and
- generating a history data set in the data system, wherein the history data set is indicative of the cost, the process step and the material portion identifier (120);
and wherein the processor is further configured for determining an aggregated cost based on the history data sets.

14. The system according to claim 13, wherein the system is configured for mining, pulp processing, paper processing or cement processing.

15. A computer-readable medium comprising instructions which, when executed by a processor of a system for industrial processing of a bulk material, cause the system to carry out the method (200) according to any one of claims 1 to 12.

## Patentansprüche

1. Verfahren (200) zur industriellen Verarbeitung eines Massenmaterials, wobei die industrielle Verarbeitung eine Vielzahl von Prozessschritten (100) umfasst, wobei das Verfahren (200) Folgendes umfasst:
- Definieren einer Materialportion (110) des Massenmaterials;
- Generieren eines Materialportionsidentifikators (120), der mit der Materialportion (110) assoziiert ist;
- Verarbeiten der Materialportion (110) in mindestens zwei Prozessschritten der Vielzahl von Prozessschritten (100);
wobei das Verfahren (200) für jeden Prozessschritt der mindestens zwei Prozessschritte umfasst:
- Bestimmen von Kosten für die Verarbeitung der Materialportion (110) in dem Prozessschritt, wobei die Kosten mindestens eines von Energieverbrauchskosten, die verbrauchte Brennstoffenergie und/oder verbrauchte elektrische Energie angeben, wobei Brennstoffkosten eine verbrauchte Brennstoffmenge sind, und Kohlenstoffemissionskosten umfassen, die eine Kohlendioxidemission angeben, wobei die Kosten basierend auf Prozesssensordaten des Prozessschritts bestimmt werden; und
- Generieren eines Historiendatensatzes, wobei der Historiendatensatz die Kosten, den Prozessschritt und den Materialportionsidentifikator angibt (120);
und wobei das Verfahren (200) ferner Bestimmen aggregierter Kosten basierend auf den Historiendatensätzen umfasst.

2. Verfahren (200) nach Anspruch 1, wobei Generieren des Materialportionsidentifikators (120) Generieren von Attributen (124) des Materialportionsidentifikators (120) umfasst, wobei die Attribute (124) Eigenschaften der Materialportion (110) angeben.

3. Verfahren (200) nach Anspruch 2, wobei die Attribute (124) mindestens eines von einem Standortattribut, das einen aktuellen Standort der Materialportion (110) angibt, eines extensiven Attribut, das eine extensive Eigenschaft der Materialportion (110) angibt, und eines intensiven Attributs, das eine intensive Eigenschaft der Materialportion (110) angibt, umfassen.

4. Verfahren (200) nach einem der Ansprüche 2 und 3, ferner umfassend für jeden Prozessschritt der mindestens zwei Prozessschritte:
- Aktualisieren der Attribute (124) basierend auf dem Prozessschritt.

5. Verfahren (200) nach einem der vorhergehenden Ansprüche, wobei die Kosten ferner mindestens eines von Umweltkosten, Prozesseffizienzkosten und monetären Kosten umfassen.

6. Verfahren (200) nach einem der vorhergehenden Ansprüche, wobei die Kosten ferner basierend auf mindestens einem von einem Kostenmodell des Prozessschritts und Benutzereingabedaten des Prozessschritts bestimmt werden.

7. Verfahren (200) nach einem der vorhergehenden Ansprüche, wobei die mindestens zwei Prozessschritte mindestens eines von Transportieren der Materialportion (110), Lagern der Materialportion (110), einem Prozess, welcher eine intensive Eigenschaft der Materialportion (110) ändert, und einem Prozess, welcher eine extensive Eigenschaft der Materialportion (110) ändert, umfassen.

8. Verfahren (200) nach einem der vorhergehenden Ansprüche, wobei, wenn die Materialportion (110) zusammen mit einer anderen Materialportion in dem Prozessschritt verarbeitet wird, Bestimmen der Kosten für die Verarbeitung der Materialportion (110) in dem Prozessschritt umfasst
- Bestimmen kombinierter Kosten für die Verarbeitung der Materialportion (110) und der anderen Materialportion in dem Prozessschritt; und
- Bestimmen der Kosten für die Verarbeitung der Materialportion (110) in dem Prozessschritt und anderer Kosten für die Verarbeitung der anderen Materialportion durch proportionales Zuweisen der kombinierten Kosten zu den Kosten und den anderen Kosten.

9. Verfahren (200) nach einem der vorhergehenden Ansprüche, das ferner Aufteilen des Materialportionsidentifikators in mindestens zwei aufgeteilte Materialportionsidentifikatoren umfasst, wobei das Aufteilen umfasst:
- Generieren der mindestens zwei aufgeteilten Materialportionsidentifikatoren, wobei jeder der mindestens zwei aufgeteilten Materialportionsidentifikatoren mit einer Materialteilportion der Materialportion assoziiert ist; und
- Assoziieren von jedem der mindestens zwei aufgeteilten Materialportionsidentifikatoren mit den Historiendatensätzen des Materialportionsidentifikators.

10. Verfahren (200) nach einem der Ansprüche 1 bis 8, wobei das Verfahren (200) ferner Zusammenführen des Materialportionsidentifikators mit einem weiteren Materialportionsidentifikator zu einem zusammengeführten Materialportionsidentifikator umfasst, wobei der weitere Materialportionsidentifikator mit einer weiteren Materialportion des Massenmaterials assoziiert ist, wobei das Zusammenführen umfasst:
- Generieren des zusammengeführten Materialportionsidentifikators, wobei der zusammengeführte Materialportionsidentifikator mit der Materialportion und der weiteren Materialportion assoziiert ist; und
- Assoziieren des zusammengeführten Materialportionsidentifikators mit den Historiendatensätzen, die den Materialportionsidentifikator angeben, und mit weiteren Historiendatensätzen, die den weiteren Materialportionsidentifikator angeben.

11. Verfahren (200) nach einem der vorhergehenden Ansprüche, wobei die industrielle Verarbeitung Bergbau, Zellstoffverarbeitung, Papierverarbeitung oder Zementverarbeitung umfasst.

12. Verfahren (200) nach einem der vorhergehenden Ansprüche, wobei die mindestens zwei Prozessschritte mindestens einen Prozess mit einem kontinuierlichen Materialfluss umfassen.

13. System zur industriellen Verarbeitung eines Massenmaterials, wobei die industrielle Verarbeitung eine Vielzahl von Prozessschritten (100) umfasst, wobei das System einen Prozessor und ein Datensystem umfasst, wobei das System ausgestaltet ist zum:
- Definieren einer Materialportion (110) des Massenmaterials durch den Prozessor;
- Generieren eines Materialportionsidentifikators (120) in dem Datensystem durch den Prozessor, wobei der Materialportionsidentifikator (120) mit der Materialportion (110) assoziiert ist;
- Verarbeiten der Materialportion (110) in mindestens zwei Prozessschritten der Vielzahl von Prozessschritten (100);
wobei der Prozessor für jeden Prozessschritt der mindestens zwei Prozessschritte ausgestaltet ist zum:
- Bestimmen von Kosten für die Verarbeitung der Materialportion (110) in dem Prozessschritt, wobei die Kosten mindestens eines von Energieverbrauchskosten, die verbrauchte Brennstoffenergie und/oder verbrauchte elektrische Energie angeben, wobei Brennstoffkosten eine verbrauchte Brennstoffmenge sind, und Kohlenstoffemissionskosten umfassen, die eine Kohlendioxidemission angeben, wobei die Kosten basierend auf Prozesssensordaten des Prozessschritts bestimmt werden; und
- Generieren eines Historiendatensatzes in dem Datensystem, wobei der Historiendatensatz die Kosten, den Prozessschritt und den Materialportionsidentifikator angibt (120);
und wobei der Prozessor ferner zum Bestimmen aggregierter Kosten basierend auf den Historiendatensätzen ausgestaltet ist.

14. System nach Anspruch 13, wobei das System für Bergbau, Zellstoffverarbeitung, Papierverarbeitung oder Zementverarbeitung ausgestaltet ist.

15. Computerlesbares Medium, umfassend Anweisungen, die, wenn sie durch einen Prozessor eines Systems zur industriellen Verarbeitung eines Massenmaterials ausgeführt werden, bewirken, dass das System das Verfahren (200) nach einem der Ansprüche 1 bis 12 durchführt.

## Revendications

1. Procédé (200) de traitement industriel d'un matériau en vrac, le traitement industriel comprenant une pluralité d'étapes de traitement (100), le procédé (200) comprenant :
- la définition d'une portion de matériau (110) du matériau en vrac ;
- la génération d'un identifiant de portion de matériau (120) associé à la portion de matériau (110) ;
- le traitement de la portion de matériau (110) lors d'au moins deux étapes de traitement de la pluralité d'étapes de traitement (100) ;
le procédé (200) comprenant, pour chaque étape de traitement parmi les au moins deux étapes de traitement :
- la détermination d'un coût de traitement de la portion de matériau (110) lors de l'étape de traitement, le coût comprenant au moins un coût parmi un coût de consommation d'énergie indiquant une énergie combustible consommée et/ou une énergie électrique consommée, un coût de combustible qui est une quantité de combustible consommée, et un coût d'émission de carbone indiquant une émission de dioxyde de carbone, le coût étant déterminé sur la base de données de capteurs de traitement de l'étape de traitement ; et
- la génération d'un ensemble de données historiques, l'ensemble de données historiques indiquant le coût, l'étape de traitement et l'identifiant de portion de matériau (120) ;
et le procédé (200) comprenant en outre la détermination d'un coût agrégé sur la base des ensembles de données historiques.

2. Procédé (200) selon la revendication 1, dans lequel la génération de l'identifiant de portion de matériau (120) comprend la génération d'attributs (124) de l'identifiant de portion de matériau (120), les attributs (124) indiquant des propriétés de la portion de matériau (110).

3. Procédé (200) selon la revendication 2, dans lequel les attributs (124) comprennent au moins un attribut parmi un attribut d'emplacement indiquant un emplacement courant de la portion de matériau (110), un attribut extensif indiquant une propriété extensive de la portion de matériau (110), et un attribut intensif indiquant une propriété intensive de la portion de matériau (110).

4. Procédé (200) selon l'une quelconque des revendications 2 et 3, comprenant en outre, pour chaque étape de traitement parmi les au moins deux étapes de traitement :
- l'actualisation des attributs (124) sur la base de l'étape de traitement.

5. Procédé (200) selon l'une quelconque des revendications précédentes, dans lequel le coût en comprend en outre au moins un parmi un coût environnemental, un coût d'efficacité de processus et un coût monétaire.

6. Procédé (200) selon l'une quelconque des revendications précédentes, dans lequel le coût est en outre déterminé sur la base d'un modèle de coût de l'étape de traitement et/ou de données d'entrée utilisateur de l'étape de traitement.

7. Procédé (200) selon l'une quelconque des revendications précédentes, dans lequel les au moins deux étapes de traitement comprennent au moins une opération parmi le transport de la portion de matériau (110), le stockage de la portion de matériau (110), un traitement modifiant une propriété intensive de la portion de matériau (110), et un traitement modifiant une propriété extensive de la portion de matériau (110).

8. Procédé (200) selon l'une quelconque des revendications précédentes dans lequel, si la portion de matériau (110) est traitée conjointement avec une autre portion de matériau lors de l'étape de traitement, la détermination du coût de traitement de la portion de matériau (110) lors de l'étape de traitement comprend
- la détermination d'un coût combiné de traitement de la portion de matériau (110) et de l'autre portion de matériau lors de l'étape de traitement ; et
- la détermination du coût de traitement de la portion de matériau (110) lors de l'étape de traitement et d'un autre coût de traitement de l'autre portion de matériau par affectation proportionnelle du coût combiné au coût et à l'autre coût.

9. Procédé (200) selon l'une quelconque des revendications précédentes, comprenant en outre la séparation de l'identifiant de portion de matériau en au moins deux identifiants de portion de matériau séparés, la séparation comprenant :
- la génération des au moins deux identifiants de portion de matériau séparés, chacun des au moins deux identifiants de portion de matériau séparés étant associé à une sous-portion de matériau de la portion de matériau ; et
- l'association de chacun des au moins deux identifiants de portion de matériau séparés avec les ensembles de données historiques de l'identifiant de portion de matériau.

10. Procédé (200) selon l'une quelconque des revendications 1 à 8, le procédé (200) comprenant en outre la fusion de l'identifiant de portion de matériau avec un autre identifiant de portion de matériau en un identifiant de portion de matériau fusionné, l'autre identifiant de portion de matériau étant associé à une autre portion de matériau du matériau en vrac, la fusion comprenant :
- la génération de l'identifiant de portion de matériau fusionné, l'identifiant de portion de matériau fusionné étant associé à la portion de matériau et à l'autre portion de matériau ; et
- l'association de l'identifiant de portion de matériau fusionné avec les ensembles de données historiques indiquant l'identifiant de portion de matériau et avec d'autres ensembles de données historiques indiquant l'autre identifiant de portion de matériau.

11. Procédé (200) selon l'une quelconque des revendications précédentes, dans lequel le traitement industriel comprend une exploitation minière, le traitement de pâte à papier, le traitement de papier ou le traitement de ciment.

12. Procédé (200) selon l'une quelconque des revendications précédentes, dans lequel les au moins deux étapes de traitement comprennent au moins un traitement ayant un flux continu de matériau.

13. Système pour le traitement industriel d'un matériau en vrac, le traitement industriel comprenant une pluralité d'étapes de traitement (100), le système comprenant un processeur et un système de données, le système étant conçu pour :
- définir, par le processeur, une portion de matériau (110) du matériau en vrac ;
- générer, par le processeur, un identifiant de portion de matériau (120) dans le système de données, l'identifiant de portion de matériau (120) étant associé à la portion de matériau (110) ;
- traiter la portion de matériau (110) lors d'au moins deux étapes de traitement de la pluralité d'étapes de traitement (100) ;
dans lequel, pour chaque étape de traitement parmi les au moins deux étapes de traitement, le processeur est conçu pour :
- déterminer un coût de traitement de la portion de matériau (110) lors de l'étape de traitement, le coût comprenant au moins un coût parmi un coût de consommation d'énergie indiquant une énergie combustible consommée et/ou une énergie électrique consommée, un coût de combustible qui est une quantité de combustible consommée, et un coût d'émission de carbone indiquant une émission de dioxyde de carbone, le coût étant déterminé sur la base de données de capteurs de traitement de l'étape de traitement ; et
- générer un ensemble de données historiques dans le système de données, l'ensemble de données historiques indiquant le coût, l'étape de traitement et l'identifiant de portion de matériau (120) ;
et dans lequel le processeur est en outre conçu pour déterminer un coût agrégé sur la base des ensembles de données historiques.

14. Système selon la revendication 13, le système étant conçu pour l'exploitation minière, le traitement de la pâte à papier, le traitement du papier ou le traitement du ciment.

15. Support lisible par ordinateur comprenant des instructions qui, lors de leur exécution par un processeur d'un système pour le traitement industriel d'un matériau en vrac, amènent le système à réaliser le procédé (200) selon l'une quelconque des revendications 1 à 12.
